(19) Europäisches Patentamt
European Patent Office
Office européen des brevets

(11) **EP 2 961 280 B1**

(12) **EUROPÄISCHE PATENTSCHRIFT**

(45) Veröffentlichungstag und Bekanntmachung des Hinweises auf die Patenterteilung:
**03.10.2018 Patentblatt 2018/40**

(21) Anmeldenummer: **14711694.1**

(22) Anmeldetag: **26.02.2014**

(51) Int Cl.:
*A21D 4/00* (2006.01)    *A23L 3/3418* (2006.01)
*A21D 8/06* (2006.01)    *B65B 29/08* (2006.01)
*B65D 81/34* (2006.01)

(86) Internationale Anmeldenummer:
**PCT/EP2014/053719**

(87) Internationale Veröffentlichungsnummer:
**WO 2014/131793 (04.09.2014 Gazette 2014/36)**

(54) **VERFAHREN ZUR HERSTELLUNG VON BACKWAREN MIT LANGER HALTBARKEIT**

METHOD FOR PRODUCING BAKED GOODS HAVING A LONG SHELF LIFE

PROCÉDÉ DE PRODUCTION DE PRODUITS DE BOULANGERIE À LONGUE CONSERVATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.03.2013 DE 102013203575**

(43) Veröffentlichungstag der Anmeldung:
**06.01.2016 Patentblatt 2016/01**

(73) Patentinhaber: **Kuchenmeister GmbH**
**59494 Soest (DE)**

(72) Erfinder:
• **TROCKELS, Hans-Günter**
  **59494 Soest (DE)**
• **JANK, Rüdiger**
  **16548 Glienicke (DE)**
• **WEBER, Matthias**
  **48231 Warendorf (DE)**

(74) Vertreter: **Maikowski & Ninnemann**
**Patentanwälte Partnerschaft mbB**
**Postfach 15 09 20**
**10671 Berlin (DE)**

(56) Entgegenhaltungen:
**ES-A1- 2 342 917**    **FR-A1- 2 842 991**
**FR-A1- 2 858 806**    **FR-A1- 2 918 251**

• **DATABASE GNPD [Online] MINTEL; Juli 2000 (2000-07), Anonymous: "Conditola Cake", XP002725053, Database accession no. 43449**
• **Schünemann/ Treu: "Technologie der Backwarenherstellung", 2009, Gildebuchverlag, Alfeld, XP002725054, Seiten 331-331, Seite 331 - Seite 331**
• **HEINZ KAISER ET AL: "Einfluss der Backbedingungen und des Wassergehaltes auf das Backen von Rühr- und Sandmassen /// Influence of baking conditions and water contents on the baking process of batters", GETREIDE MEHL UND BROT, BOCHUM, DE, Bd. 56, Nr. 1, 1. Januar 2002 (2002-01-01) , Seiten 44-51, XP009178155, ISSN: 0367-4177**

**Beschreibung**

Die vorliegende Erfindung betrifft ein Verfahren zur Herstellung von Backwaren mit langer Haltbarkeit gemäß Anspruch 1.

**Beschreibung**

Backwaren mit langer Haltbarkeit werden unter Anwendung verschiedener Verpackungs- und Herstellungsverfahren produziert. So werden zum Beispiel schon seit alters her Pumpernickel oder auch Kuchen in Metalldosen oder Kuchen in durch einen zweiten nachgeschalteten Erhitzungsprozess, wie zum Beispiel dem Einwecken in Gläsern mit Glasdeckel und Gummidichtringen, verschlossen.

Neben diesen eher traditionellen Verfahren zur Haltbarmachung von Backwaren wurden in der Vergangenheit auch verschiedene weitere Methoden und Ansätze entwickelt.

Zum Beispiel kann durch eine geeignete Auswahl an Rezepturbestandteilen der verwendeten Backmasse eine Reduzierung der Wasseraktivität der Backmasse und entsprechend auch der fertig gestellten Backware erreicht werden.

Die Wasseraktivität ($a_W$-Wert) ist ein Maß zur Beschreibung von ungebundenen und locker gebundenen Wasser, also für die Menge an Wasser, die Mikroorganismen in Lebensmitteln oder Speisen zur Verfügung steht. Je größer der aw-Wert ist, desto mehr ungebundenes Wasser ist in einem Lebensmittel enthalten, so dass das entsprechende Lebensmittel leichter verderben kann. Die leichte Verderbbarkeit von Lebensmitteln mit einem hohen Wassergehalt liegt insbesondere darin begründet, dass das frei verfügbare Wasser für das Wachstum und den Stoffwechsel von einer Vielzahl von Mikroorganismen von entscheidender Bedeutung ist.

Der $a_W$-Wert ist als Quotient des Wasserdampfdruckes über ein Material (p) zu dem Wasserdampfdruck über reinem Wasser ($p_0$) bei einer bestimmten Temperatur definiert:

$$a_W = p/p_0.$$

Bei den meisten Mikroorganismen liegt das Wachstumsoptimum im Temperaturbereich zwischen 20 und 35°C bei einem aw-Wert von größer 0,8 bis 1.

Die Wasseraktivität von Lebensmitteln kann durch verschiedene Maßnahmen gesenkt werden, wie zum Beispiel Trocknung oder Zugabe von wasserlöslichen Stoffen. In letzterem Fall werden verschiedene Zuckerarten, vorzugsweise Glukose, Fruktose, Saccharose, Zuckeralkohole, Glycerin und Salz dem Lebensmittel zugefügt, wobei das Wasser an die Zuckermoleküle gebunden wird. Die genannte Rohstoffauswahl ist üblicherweise nur bei Feinbackwaren anwendbar. Wenn die Sättigung der löslichen Stoffe im Wasser erreicht wird, ist eine weitere Senkung der Wasseraktivität ausgeschlossen. Somit kann die Haltbarkeit solcher Produkte von wenigen Tagen auf mehrere Monate verlängert werden. Voraussetzung ist hier allerdings die Kombination mit einem entsprechenden Verpackungsverfahren.

Ein weiteres Verfahren zur Herstellung von Backwaren mit längerer Haltbarkeit ist die Anwendung der Reinraumtechnik. Hierbei werden die Backwaren unmittelbar nach dem Backprozess einer aufbereiteten Atmosphäre ausgesetzt und in dieser Atmosphäre abgekühlt. Die Kühlatmosphäre besteht üblicherweise aus gefilterter, keimarmer oder keimfreier Luft. Eine Abkühlung in einer Inertgasatmosphäre ist ebenfalls bekannt.

Zur Verlängerung der Haltbarkeit von Backwaren können auch spezielle Verpackungsverfahren angewendet werden. Dabei werden durch den Austausch von Luft gegen Inertgas (Atmosphärenaustausch) mikrobiologische und oxidative Prozesse in den Backwaren gedrosselt. Ein typisch verwendetes Inertgas ist dabei ein Gemisch aus Stickstoff und Kohlendioxid.

Ein weiteres Verfahren zur Verlängerung der Haltbarkeit von Backwaren ist das Pasteurisieren von Backwaren in der Verpackungsfolie. Dieses Verfahren wird bei Backwaren mit hoher Wasseraktivität wie Schnittbrot oder auch Toastbrot angewendet.

Mit der Anwendung der angeführten Maßnahmen und Verfahren wird die Haltbarkeit von Backwaren um ein Vielfaches der ursprünglichen Haltbarkeitsdauer verlängert. Allerdings haben die Verfahren den Nachteil, dass die Produkte teilweise sensorisch verändert werden. So weisen Backwaren nach der Anwendung eines Pasteurisationsverfahrens und der Anpassung der Rezeptur typischerweise geringere Feuchtigkeiten und einen relativ süßen Geschmack auf. Zwar sind die Produkte mikrobiologisch stabil, unterliegen aber im Laufe der Lagerung einer Texturveränderung.

Ein weiterer möglicher Ansatz zur Herstellung von Backwaren mit einer verlängerten Haltbarkeit besteht in der Anwendung einer veränderten Backatmosphäre, wie zum Beispiel bei der Herstellung von Spezialbroten, wie Pumpernickel und Vollkornbrot, bekannt. Diese Brotsorten werden in geschlossenen, aber nicht wasserdampfdichten Formen unter einer Wasserdampfatmosphäre gebacken. Der Atmosphärendruck liegt bei diesen Verfahren bei ca. 50 kPa (0,5 bar) über dem Normaldruck. Der Backprozess wird vorzugsweise bei Temperaturen zwischen 90°C bis 150°C durchgeführt und dauert in Abhängigkeit des Gewichtes der Backwaren und der Temperatur bis zu 24 Stunden. Ziel dieser Verfahren ist die Herstellung einer Backware mit einer hohen Feuchte und einer besonderen Aromaausbildung. Aufgrund der langen Backzeit und der relativ niedrigen Temperaturen laufen enzymatische Prozesse weiter und verändern das Produkt, was sich zum Beispiel in einem süßlichen Geschmack und einer dunklen Farbe widerspiegelt.

Die ES 2 342 917 A1 beschreibt ein Verfahren zur Herstellung von Kuchen, wobei eine Biskuitmasse in einen verschließbaren Behälter z.B. Glasbehälter eingefüllt wird und in diesem Behälter gebacken wird. Nach dem Backen wird die Biskuitmasse im Behälter auf Umgebungstemperatur abgekühlt, wodurch im Behälterinnenraum eine Depression hervorgerufen wird, die ein Vakuum im Behälterinnenraum bewirkt. Die Backtemperatur wird während des Erhitzens zwischen 85-99°C gehalten, so dass keine Gase aus dem Behälterinnenraum austreten (S. 5, Zeile 4-11 der D1a). Falls ein Autoklav für Nahrungsmittel zum Backen verwendet wird, kann die Backtemperatur bis zu 150°C mit 1 bar Druck vor der Ausbildung von Gasen, die vom Backen stammen, betragen.

Aus der US 3,531,300 ist zudem z.B. auch bekannt, vorgekochte Lebensmittel in einer flexiblen Verpackung zu erwärmen und somit zu sterilisieren, wobei ein externer Druck während des Sterilisationsprozesses angelegt wird.

Wie oben angeführt, weisen die bisher bekannten Verfahren zur Herstellung von Backwaren mit einer langen Haltbarkeit den Nachteil auf, dass es zu einer sensorischen Veränderung der Produkte kommt. Eine sensorische Veränderung von lang haltbaren Backwaren kann allerdings von Verbrauchern als negativ empfunden werden. Entsprechend war das Ziel der vorliegenden Erfindung die Bereitstellung eines Verfahrens, welches die Herstellung von Backwaren mit einer langen Haltbarkeit, zum Beispiel von über 12 Monaten, ermöglicht, ohne dass eine sensorische Veränderung der Produkte erfolgt.

Diese Aufgabe wird erfindungsgemäß durch ein Verfahren mit den Merkmalen des Anspruchs 1 gelöst.

Demnach wird ein Verfahren zum Backen einer Backmasse in mindestens einer verschlossenen Backform bereitgestellt, wobei die Backform aus beschichteter Aluminiumfolie besteht, welches die folgenden Schritte umfasst:

Herstellen einer Backmasse, insbesondere einer Kuchenmasse wie z.B. Rührmasse, Sandmasse, Quarkmasse, Baumkuchenmasse, und Beaufschlagen der Backmasse mit

a) mindestens einem inerten Gas und/oder Luft, wobei die Dichte der Backmasse nach Beaufschlagen mit dem inerten Gas und/oder Luft zwischen 0,4 und 0,8 g/cm³ beträgt,

b) Einfüllen der Backmasse in die mindestens eine Backform und Verschließen der mindestens einen Backform,

c) Backen der mindestens einen verschlossenen Backform in mindestens einem Reaktor, wobei

- in einer ersten Phase (Phase 1) der Aufbau eines Reaktordruckes auf Werte zwischen 120 kPa und 400 kPa über einen Zeitraum von 3 bis 30 min bei einer Reaktortemperatur zwischen 80°C und 300°C erfolgt, wobei der Reaktordruck zu jedem Zeitpunkt mit einem Innendruck in der verschlossenen Backform korrespondiert,

- in einer zweiten Phase (Phase 2) der Reaktordruck bei Werten zwischen 120 kPa und 400 kPa bei einer Reaktortemperatur zwischen 80°C und 300°C über einen Zeitraum von 5 min bis 200 min gehalten wird, in welcher die Backmasse gebacken wird, und

- in einer dritten Phase (Phase 3) der Reaktordruck auf Werte zwischen 100 kPa und 120 kPa bei gleichzeitiger Reduzierung der Reaktortemperatur auf 20°C bis 100°C schrittweise abgebaut wird, wobei der Reaktordruck zu jedem Zeitpunkt mit dem Innendruck in der verschlossenen Backform korrespondiert, und

d) Entnahme der verschlossenen Backformen enthaltend die gebackene Backware aus dem Reaktor.

Das vorliegende Verfahren sieht somit vor, dass eine Backmasse wie z.B. eine Kuchenbackmasse zunächst bis zu einer vorgegebenen Dichte mit einem inerten Gas und/oder Luft beaufschlagt wird bzw. aufgeschäumt wird. Nach Einfüllen der aufgeschäumten bzw. beaufschlagten Backmasse in die Backform wird diese vor dem Backprozess verschlossen und die Backmasse wird in der verschlossenen Form gebacken.

Im Gegensatz zu den z.B. aus der US 3,531,300 oder US 3,769,028 bekannten Verfahren, in denen natürliche, bereits vorgekochte oder vorgebackene Produkte sterilisiert werden (d.h. es erfolgt lediglich eine Abtötung von Mikroorganismen, aber keine chemische Veränderung des Produktes), ermöglicht das vorliegende Verfahren ein Backen einer Backmasse (und somit eine chemische und thermisch physikalische Veränderung der selbigen) in einer hermetisch abgeschlossenen Backform. Unter den vorliegenden Verfahrensbedingungen ist

es somit möglich, in einem Vorgang einen vollständigen Backprozess mit gleichzeitiger Sterilisation durchzuführen. Wird eine Backmasse vor dem Backprozess in einer geschlossenen Backform hingegen nicht aufgeschäumt, d.h. die Dichte der Backmasse reduziert, kommt es zur Ausbildung einer gelartigen Textur bzw. gelartigen Masse, deren Struktur nicht einer Backmasse entspricht und somit sensorisch nicht akzeptabel ist.

Die fertig gebackene Backware verbleibt in der verschlossenen Backform bis zum Verzehr der Backware. Die Backform dient somit gleichzeitig als Verpackungsmaterial.

Das vorliegende Backverfahren findet unter variabler Druckerhöhung und Druckreduzierung statt. Dabei wird in der ersten Backphase (Phase 1) der Druck aufgebaut, wobei der Druck in der Backatmosphäre ungefähr dem Innendruck in der Backform entspricht. Dies verhindert das Verformen und Auftreten von Undichtheiten in der Backfolie. Für den Fall, dass der Außendruck der Backatmosphäre und der Innendruck in der Backform nicht korrespondieren, kann es bei zu hohem Atmosphärendruck bzw. zu schnellem Druckaufbau zu einer Verwölbung der Verschlussfolie der verschlossenen Backform nach innen kommen, wodurch die Backform an den Nähten undicht wird und sich verformt.

In der zweiten Backphase (Phase 2) wird der Druck als Prozessdruck stabil gehalten und es erfolgt ein Ausbacken der sich in der verschlossenen Backform befindlichen Backmasse.

In der dritten Phase (Phase 3) wird der Druck bei gleichzeitiger Temperaturreduzierung im Reaktor langsam abgebaut. Auch hier, wie in Analogie zu Phase 1, erfolgt die Druckreduzierung korrespondierend zu dem Innendruck in der Backform, um ein Verformen der Backfolie zu vermeiden. Insgesamt ist der Druck-Zeitverlauf des vorliegenden Verfahrens abhängig von der Größe der Backform, der Stabilität der Backform und der Menge der verwendeten Backmischung.

Mit dem vorliegenden Verfahren ist es möglich, Backwaren, insbesondere Feinbackwaren, wie Rührkuchen und Sandkuchen, herzustellen, die eine veränderte Textur und eine Mindesthaltbarkeit von mehr als 12 Monaten z.B. bis zu 36 Monaten aufweisen, ohne dass eine sensorische Änderung der Backwarentextur erfolgt und die hergestellten Backwaren mikrobiologisch nicht verderbbar sind. Die mittels des vorliegenden Verfahrens hergestellten Produkte zeichnen sich durch eine weiche, krustenlose Struktur und eine hohe Produktfeuchte aus. Diese Eigenschaften werden über die gesamte Haltbarkeitsdauer konserviert. Die sehr weiche Textur der vorliegend hergestellten Backware wird als besonders angenehm empfunden.

Im vorliegenden Verfahrens wird in der ersten Phase (Phase 1) des Schrittes c) der Reaktordruck auf Werte zwischen 120 kPa und 400 kPa, bevorzugt 150 bis 300 kPa, insbesondere bevorzugt zwischen 150 und 200 kPa aufgebaut. Der Druck im Reaktor erreicht somit Werte, die mindestens 20 kPa über dem Normaldruck liegen. Wesentlich ist, dass der Reaktordruck zu jedem Zeitpunkt mit dem sich in der Backform vorhandenen bzw. sich aufbauenden Innendruck korrespondiert. Die Reaktortemperatur liegt in Phase 1 bei Werten zwischen 80 °C bis 300°C bevorzugt 100°C bis 170°C, insbesondere bevorzugt bei 120°C.

In der sich an die Phase 1 anschließenden Phase 2 wird der in Phase 1 eingestellte Reaktordruck über einen Zeitraum aufrechterhalten, in welchem die Backmasse gebacken wird. Der Zeitraum der Phase 2 ist dabei abhängig von der Menge und der Art der verwendeten Backmasse, der Denaturierung der Inhaltsstoffe der Backmasse (Proteindenaturierung, Stärkeverkleisterung) und der gewünschten Texturbildung. So kann die Backzeit für einen 300 g Backmasse 50 bis 60 Minuten betragen und ist somit deutlich länger als in einem normalen Backprozess. Dies ist insbesondere dadurch bedingt, dass die Kerntemperatur später erreicht wird und die Wärmeleitung geringer ist.

In der sich an die Backphase 2 anschließenden Phase 3 erfolgt ein schrittweiser Abbau des Reaktordrucks auf Werte zwischen 100 kPa und 120kPa kPa bei gleichzeitiger Reduzierung der Reaktortemperatur auf Werte zwischen 20°C und 100°C, bevorzugt 30°C und 60°C. Auch hier ist wesentlich, dass der Reaktordruck zu jedem Zeitpunkt mit dem Innendruck in der Backform korrespondiert. Nach Erreichen des Normaldruckes wird die verschlossene Backform enthaltend die gebackene Backware aus dem Reaktor entnommen.

In einer weiteren Ausführungsform des vorliegenden Verfahrens weist die verwendete Backmasse, insbesondere Rührkuchen- oder Sandkuchenmasse eine Wasseraktivität $a_w$ von 0,65 bis 0,95, bevorzugt 0,7 bis 0,95 auf. Die mittels des vorliegenden Verfahrens gebackene Backware weist ebenfalls bevorzugterweise eine Wasseraktivität von 0,65 bis 0,95, bevorzugt 0,7 bis 0,95. Aufgrund des Backens der Backmasse in der verschlossenen Backform tritt kein Wasserverlust auf, so dass der Wassergehalt der fertigen Backware sich nicht oder nur geringfügig von der Ausgangsbackmasse unterscheidet. Die lange Haltbarkeit der mit dem vorliegenden Verfahren hergestellten Backware ergibt sich vielmehr durch das Abtöten von in der Backmasse vorhandenen Mikroorganismen während des Backvorganges im Reaktor (Autoklavieren) und ggf. durch das Einführen von inertem Gas in die Backmasse.

Im Vergleich zu den bisher bekannten Verfahren zur Reduzierung der Wasseraktivität einer Backmasse, wie z. B. durch Zusatz von verschiedenen Zuckerarten, erfordert das vorliegende Verfahren keine zusätzliche Zugabe von Zucker und vermeidet den sehr süßen, teilweise als unangenehm empfundenen Geschmack von solchen Backwaren.

So kann eine typische Rezeptur der vorliegend verwendeten Backmischung folgende Inhaltsstoffe (jeweils in Gew%) enthalten: Weizenmehl (15-30%, bevorzugt 18-25%), Weizenstärke (5-15%, bevorzugt 5-10%), Vollei (20-30%, bevorzugt 25%) Zucker (15 - 25%, bevorzugt 22%), Aromen (0,5%), pflanzliche Fette (20-30%, bevorzugt 25%) und andere Zutaten. Auch können der Backmasse Zusätze zur Erhöhung der Schaumstabilität zugegeben werden, wie z.B. Hydrokolloide, Xanthane oder auch Quellstärke. Unter Quellstärke ist dabei eine thermisch behandelte, weitgehend aufgeschlossene Stärke zu verstehen, die aus Getreide (Mais, Weizen, Hirse, Reis) oder aus Kartoffeln oder Tapioka gewonnen wurde. Entsprechend sind Mais-, Weizen-, Kartoffelquellstärke usw. bevorzugt. Im Unterschied zur nativen Stärke zeigt sie ein verändertes Lösungsverhalten, wobei sie bereits bei Vermischung mit kaltem Wasser aufquillt.

Die Dichte der vorliegend verwendeten Backmischung nach Beaufschlagen der Backmischung mit dem mindestens einen inerten Gas und/oder Luft liegt wie oben angeführt zwischen 0,4 und 0,8 g/cm³, bevorzugt zwischen 0,45 und 0,7 g/cm³, insbesondere bevorzugt zwischen 0,45 und 0,6 g/cm³.

Es ist des Weiteren bevorzugt, wenn das mindestens eine inerte Gas, das zum Beaufschlagen der Backmasse verwendet wird, ausgewählt ist aus der Gruppe umfassend Stickstoff und Kohlendioxid, wobei Stickstoff bevorzugt eingesetzt wird. Mischungen von verschiedenen Inertgasen sind ebenfalls möglich.

Es ist bevorzugt, wenn die Menge an die Backmasse eingeführten Inertgas und/oder Luft bis zu 60 Volumen% beträgt, so dass der Volumenanteil des Gases in der Backmasse bis zu 60% betragen kann.

Im beanspruchten Verfahren besteht die Backform aus beschichteter Aluminiumfolie.

Es ist des Weiteren bevorzugt, wenn der während des Backprozesses im Reaktor aufzubauende Druck unter Verwendung von Dampf und/oder Druckluft aufgebaut wird. Bevorzugt erfolgt der Backprozess in einem doppelwandigen Reaktor, der hermetisch verschließbar ist. Während des Backprozesses erfolgt der Druckaufbau im Reaktor, wobei z. B. für den Druckaufbau Dampf verwendet werden kann, um die Enthalpie in der Atmosphäre zu erhöhen. Auch ist die Durchführung des Backprozesses im Reaktor in einer trockenen Atmosphäre möglich, wobei der Druck durch Druckluft aufgebaut wird. Es ist auch denkbar, das vorliegende Verfahren in einem Durchlaufautoklaven durchzuführen.

Im vorliegenden Verfahren wird der Reaktordruck in Phase 1 auf Werte zwischen 120 kPa und 400 kPa, bevorzugt 150 kPa und 300 kPa, insbesondere bevorzugt 150 kPa und 200 kPa über einen Zeitraum von 3 min bis 30 min, bevorzugt 5 min bis 20 min, insbesondere 7 min bis 15 min aufgebaut. Die Reaktortemperatur liegt in Phase 1 hierbei zwischen 80 °C bis 300 °C, bevorzugt 100 °C bis 200 °C, insbesondere bevorzugt bei 120 bis 170 °C.

In einer besonders bevorzugten Variante wird in Phase 1 der Reaktordruck auf Werte zwischen 150 kPa und 300 kPa, bevorzugt 150 kPa bis 250 kPa bei einer Temperatur von 120 °C über einen Zeitraum von 5 min bis 10 min, erhöht.

Im vorliegenden Verfahren wird in Phase 2 der Reaktordruck bei Werten zwischen 120 kPa und 400 kPa, bevorzugt 150 kPa und 300 kPa, insbesondere bevorzugt 150 kPa und 200 kPa bei einer Reaktortemperatur zwischen 80 °C bis 300 °C, bevorzugt 100 °C bis 200 °C, insbesondere bevorzugt 120 °C bis 170°C über einen Zeitraum von 5 min bis 200 min, bevorzugt 8 min bis 100 min, insbesondere bevorzugt 10 min bis 30 min.

Es ist ebenfalls möglich, wenn der Reaktordruck in Phase 2 bei Werten zwischen 150 und 300 kPa, bevorzugt 200 kPa bei einer Temperatur von 120 °C über einen Zeitraum von 5 min bis 20 min, bevorzugt 8 min und 15 min, insbesondere bevorzugt 10 min aufrechterhalten wird.

In einer weiteren Ausführungsform des vorliegenden Verfahrens ist die Phase 3 des schrittweisen Abbaus des Reaktordrucks in mindestens zwei Teilphasen 3a und 3b aufgeteilt. Dabei wird in Teilphase 3a bevorzugterweise der Druck aus Phase 2 zunächst konstant gehalten und lediglich die Temperatur reduziert. In der sich anschließenden Teilphase 3b kommt es dann bevorzugt zur gleichzeitigen Reduzierung von Druck und Temperatur.

Entsprechend wird bevorzugterweise die Teilphase 3a derart ausgeführt, dass die Reaktortemperatur um 20 °C bis 100 °C, bevorzugt 50 °C bis 80 °C im Vergleich zu der Reaktortemperatur in Phase 2 (d. h. der Temperatur, bei der das Ausbacken der Backmischung erfolgt) über einen Zeitraum von 1 min bis 20 min, bevorzugt 2 min bis 10 min reduziert, während der Druck konstant gehalten wird und an den Innendruck in der verschlossenen Backform angepasst ist, und somit im Wesentlichen dem Druck in Phase 2 entspricht.

So ist es möglich, in der Teilphase 3a die Temperatur bei Ausgangswerten von 120 °C bis 300 °C auf Werte zwischen 80 °C und 150°C bevorzugt 100 °C bei einem Reaktordruck zwischen 120 und 300 kPa, bevorzugt 200 bis 250 kPa über einen Zeitraum von 1 min bis 20 min, bevorzugt 2 min bis 10 min zu reduzieren. Die Zeitdauer ist hierbei insbesondere von der Produkthöhe abhängig.

In einer weiteren Variante des vorliegenden Verfahrens wird in der sich an die Teilphase 3a anschließende Teilphase 3b die Reaktortemperatur auf Endwerte zwischen 20 °C und 60 °C, bevorzugt 30 °C und 50 °C und der Reaktordruck auf Werte zwischen 100 und 120 kPa über einen Zeitraum von 5 min bis 30 min, bevorzugt 10 min bis 20 min, insbesondere bevorzugt 10 bis 15 min reduziert.

In einer weiteren Variante der Teilphase 3b wird die Temperatur des Reaktors von 100 °C auf 20 bis 60 °C und der Reaktordruck von Werten zwischen 120 und 300 kPa, auf Normaldruck (100 kPa) über einen Zeitraum von 5 min bis 20 min, bevorzugt 10 min bis 15 min erniedrigt.

Der grundlegende Gedanke des vorliegenden Verfahrens besteht im Aufbau einer Gegendruckkurve, wobei Druck und Temperatur während des Backprozesses in dem Reaktor so aufgebaut und reduziert werden, dass zu jedem Zeitpunkt des Backprozesses der Druck in der Backatmosphäre dem Innendruck in der Backform entspricht, wodurch zum einen eine Verformung der flexiblen Backform ausgeschlossen wird, und zum anderen Backwaren mit einer langen Haltbarkeit erhältlich sind.

Entsprechend ermöglicht das vorliegende Verfahren die Herstellung von Backwaren mit einer langen Haltbarkeit in einer verschlossenen Backform, die eine Haltbarkeit von über 12 Monaten und bis zu 36 Monaten aufweist und durch eine Wasseraktivität aw von 0,65 bis 0,95, bevorzugt 0,7 bis 0,95 gekennzeichnet ist.

Die mit dem vorliegenden Verfahren hergestellte Backware kann z.B. als Dessert, als normaler Kuchen, im Catering oder ähnlichen Gebieten verwendet werden.

Die Erfindung wird nachfolgend unter Bezugnahme auf die Figur der Zeichnung an einem Ausführungsbeispiel näher erläutert. Es zeigen:

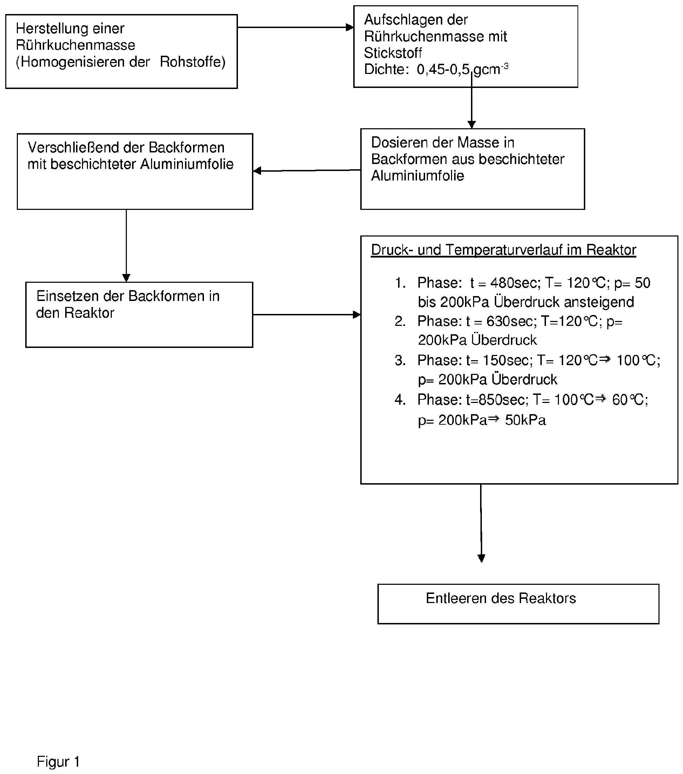

Fig. 1 eine schematische Darstellung des Herstellungsprozesses gemäß einer Ausführungsform des erfindungsgemäßen Verfahrens.

Ein allgemeines Verfahrensschema einer Ausführungsform des erfindungsgemäßen Verfahrens ist in Figur 1 gezeigt.

Hierbei erfolgt in einem ersten Schritt die Herstellung einer Rührkuchenmasse aus Fett, Ei, Mehl, Stärkepuder, Aromen und ggf. Triebmittel. Die Rührmasse wird schaumig gerührt, so dass eine ausreichende Homogenisierung der Rohstoffe gewährleistet ist. Zusätzlich wird in einem nachfolgenden Schritt die Rührkuchenmasse mit Stickstoff oder Luft beaufschlagt, so dass die Dichte der hergestellten Rührkuchenmasse zwischen 0,45 bis 05 g/cm$^3$ beträgt.

Zur Herstellung der Backware wird in einem nächsten Schritt die Rührkuchenmasse in Backformen aus beschichteter Aluminiumfolie dosiert. Die Menge der dosierten Masse ist entsprechend abhängig von der Größe der Backformen. Dabei sollte die Menge an in die Backformen eingeführter Backmischung bzw. Backmasse ca. 50 % bis 80% der Backform ausfüllen, da ansonsten die Gefahr besteht, dass durch den die während des Backprozesses erfolgende Volumenvergrößerung der Backmasse die Backform sich verwölben kann und somit undicht werden kann.

Nach der Eindosierung der Backmasse in die Backformen erfolgt ein Verschließen der Backformen mit beschichteter Aluminiumfolie. Hierbei ist darauf zu achten, dass die zum Verschließen verwendete Aluminiumfolie dicht und bündig auf der Backform aufliegt und mit dieser abschließt.

Im Folgenden werden die mit der Backmasse gefüllten Backformen in den Reaktor eingeführt und anschließend der Druck- und Temperaturverlauf im Reaktor eingestellt. Zunächst wird in Phase 1 der Reaktordruck auf Werte von 150 bis 200 kPa bei einer Temperatur von 120 °C über einen Zeitraum von 480 s erhöht. Dieser Druck- und Temperaturverlauf in Phase 1 garantiert, dass der Reaktordruck zu jedem Zeitpunkt mit dem Innendruck in der Backform korrespondiert, um ein Wölben der Folie nach innen und die damit verbundene Verformung der Backform zu vermeiden.

In der sich anschließenden Backphase (Phase 2) wird der eingestellte Reaktordruck von 200 kPa über einen Zeitraum von 630 s bei 120 °C aufrechterhalten, wobei in dieser Phase ein Ausbacken der Backmasse erfolgt.

Nach Fertigbacken erfolgt in Phase 3 (Teilphase 3a) eine schrittweise Druck- und Temperaturreduzierung, wobei zunächst der Reaktordruck bei 200 kPa gehalten wird und die Temperatur des Reaktorinnenraums von 120 °C auf 100 °C über einen Zeitraum von 150 s reduziert wird.

In der finalen Phase 4 (Teilphase 3b) erfolgt eine weitere Temperaturreduzierung von 100 °C auf 60 °C gekoppelt mit einer Reduzierung des Reaktorinnendrucks von 200 kPa auf 150 kPa und anschließend auf Normaldruck.

Entsprechend erfolgt in der Teilphase 3b die Druckreduzierung im Druckreaktor analog dem Innendruck in der Backform, um auch hier ein Verformen der Backfolie und damit ggf. eine Zerstörung der Backform zu vermeiden.

Nach Öffnen des Reaktors und weiterem Abkühlen wird im finalen Schritt der Reaktor entleert und die die gebackene Backware enthaltenen Backformen können dem weiteren Verbrauch zugeführt werden.

## Patentansprüche

1. Verfahren zum Backen einer Backmasse in mindestens einer verschlossenen Backform, die aus beschichteter Aluminiumfolie besteht, umfassend die Schritte

   a) Herstellen einer Backmasse, insbesondere Kuchenmasse, und Beaufschlagen der Backmasse mit mindestens einem inerten Gas und/oder Luft, wobei die Dichte der Backmasse nach Beaufschlagen mit dem inerten Gas und/oder Luft zwischen 0,4 und 0,8 g/cm$^3$ beträgt,

   b) Einfüllen der Backmasse in die mindestens eine Backform und Verschließen der mindestens einen Backform,

   c) Backen der Backmasse in der mindestens einen verschlossenen Backform in mindestens einem Reaktor, wobei

   - in einer ersten Phase (Phase 1) der Aufbau eines Reaktordruckes auf Werte zwischen 120 kPa und 400 kPa über einen Zeitraum von 3 bis 30 min bei einer Reaktortemperatur zwischen 80°C und 300°C erfolgt, wobei der Reaktordruck zu jedem Zeitpunkt mit dem Innendruck in der verschlossenen Backform korrespondiert,
   - in einer zweiten Phase (Phase 2) der Reaktordruck bei Werten zwischen 120 kPa und 400 kPa bei einer Reaktortemperatur zwischen 80°C und 300°C über einen Zeitraum von 5 min bis 200 min gehalten wird, , in welcher die Backmasse gebacken wird, und
   - in einer dritten Phase (Phase 3) der Reaktordruck auf Werte zwischen 100 kPa und 120 kPa bei gleichzeitiger Reduzierung der Reaktortemperatur auf 20°C bis 100°C schrittweise abgebaut wird, wobei der Reaktordruck zu jedem Zeitpunkt mit dem Innendruck in der verschlossenen Backform korrespondiert, und

d) Entnahme der mindestens einen verschlossenen Backform enthaltend die gebackene Backware aus dem Reaktor.

**2.** Verfahren nach Anspruch 1 , **dadurch gekennzeichnet, dass** das Backen in Schritt c) mit folgenden Druck- und Temperaturverlauf durchgeführt wird:

- in der ersten Phase (Phase 1) wird der Reaktordruck auf Werte zwischen 150 kPa bis 300 kPa, bevorzugt 150 kPa bis 200 kPa bei einer Reaktortemperatur zwischen 100°C bis 200°C, bevorzugt 120°C bis 170°C aufgebaut,
- in der zweiten Phase (Phase 2) werden der in der ersten Phase (Phase 1) eingestellte Reaktordruck und Reaktortemperatur über einen Zeitraum, in welchem die Backmasse gebacken wird, aufrechterhalten, und
- in der dritten Phase (Phase 3) werden der Reaktordruck schrittweise auf Werte zwischen 100 kPa und 120 kPa bei gleichzeitiger Reduzierung der Reaktortemperatur auf 30 bis 60°C abgebaut, wobei der Reaktordruck zu jedem Zeitpunkt mit dem Innendruck in der Backform korrespondiert.

**3.** Verfahren nach Anspruch 1 oder 2, **dadurch gekennzeichnet, dass** die Backmasse eine Wasseraktivität $a_w$ von 0,65 bis 0,95, bevorzugt 0,7 bis 0,95 aufweist.

**4.** Verfahren nach einem der vorhergehenden Ansprüche, **dadurch gekennzeichnet, dass** die gebackene Backware eine Wasseraktivität $a_w$ von 0,65 bis 0,95, bevorzugt 0,7 bis 0,95 aufweist.

**5.** Verfahren nach einem der vorhergehenden Ansprüche, **dadurch gekennzeichnet, dass** das mindestens eine inerte Gas zum Beaufschlagen der Backmischung ausgewählt ist aus der Gruppe umfassend Stickstoff und Kohlendioxid oder deren Mischung .

**6.** Verfahren nach einem der vorhergehenden Ansprüche, **dadurch gekennzeichnet, dass** die die Dichte der Backmasse nach Beaufschlagen mit dem inerten Gas und/oder Luft zwischen 0,45 und 0,7 g/cm$^3$ bevorzugt zwischen 0,45 und 0,6 g/cm$^3$ beträgt,

**7.** Verfahren nach einem der vorhergehenden Ansprüche, **dadurch gekennzeichnet, dass** der Druck im Reaktor unter Verwendung von Dampf und/oder Druckluft aufgebaut wird.

**8.** Verfahren nach einem der vorhergehenden Ansprüche, **dadurch gekennzeichnet, dass** in der ersten Phase (Phase 1) der Reaktordruck auf Werte zwischen 150 kPa und 300 kPa, insbesondere bevorzugt 150 kPa und 200 kPa über einen Zeitraum von 5 bis 20 min, insbesondere 7 bis 15 min, bei einer Reaktortemperatur zwischen 80°C und 300°C, bevorzugt 100°C und 200°C, insbesondere bevorzugt 120°C bis 170°C eingestellt wird.

**9.** Verfahren nach einem der vorhergehenden Ansprüche, **dadurch gekennzeichnet, dass** in der zweiten Phase (Phase 2) der Reaktordruck bei Werten zwischen 150 und 300 kPa, insbesondere bevorzugt 150 und 200 kPa bei einer Reaktortemperatur zwischen 100°C und 200°C, insbesondere bevorzugt 120°C bis 170°C über einen Zeitraum von 8 bis 100 min, insbesondere bevorzugt 10 bis 30 min gehalten wird.

**10.** Verfahren nach einem der vorhergehenden Ansprüche, **dadurch gekennzeichnet, dass** die dritte Phase (Phase 3) in mindestens zwei Teil-Phasen (Phasen 3a und 3b) aufgeteilt ist, wobei in Teil-Phase 3a der Druck aus der zweiten Phase (Phase 2) zunächst konstant gehalten wird und lediglich die Temperatur reduziert wird und in Teil-Phase 3b sowohl Druck als auch Temperatur reduziert werden.

**11.** Verfahren nach Anspruch 10, **dadurch gekennzeichnet, dass** in Teil-Phase 3a die Reaktortemperatur um 20 bis 100°C, bevorzugt 50 bis 80°C im Vergleich zu der Reaktortemperatur in der zweiten Phase (Phase 2) über einen Zeitraum von 1 min bis 10 min, bevorzugt 2 bis 5 min reduziert wird, während der Druck konstant gehalten wird und an den Innendruck in der verschlossenen Backform in der zweiten Phase (Phase 2) angepasst ist.

**12.** Verfahren nach Anspruch 10 oder 11, **dadurch gekennzeichnet, dass** in Teil-Phase 3b die Reaktortemperatur auf Endwerte zwischen 20°C bis 60°C, bevorzugt 30°C bis 50°C und der Reaktordruck auf Endwerte zwischen 100 kPa und 120 kPa über einen Zeitraum von 5 min bis 30 min, bevorzugt 10 min bis 20 min, insbesondere bevorzugt 10 bis 15 min reduziert wird.

**Claims**

**1.** Method for baking a baking mixture in at least one closed baking mould consisting of coated aluminium foil, comprising the following steps:

a) producing a baking mixture, in particular a cake mixture, and exposing the baking mixture to at least one inert gas and/or air, the density of the baking mixture after exposure to the inert gas and/or air being between 0.4 and 0.8 $g/cm^3$,

b) introducing the baking mixture into the at least one baking mould and closing said at least one baking mould,

c) baking the baking mixture in the at least one closed baking mould in at least one reactor, wherein

- in a first phase (phase 1) a reactor pressure is built up to values between 120 kPa and 400 kPa over a period of 3 to 30 minutes at a reactor temperature between 80°C and 300°C, the reactor pressure at any time point corresponding to the internal pressure in the closed baking mould,

- in a second phase (phase 2) the reactor pressure is held at values between 120 kPa and 400 kPa at a reactor temperature between 80°C and 300°C for a period of 5 minutes to 200 minutes, during which phase the baking mixture is baked, and

- in a third phase (phase 3) the reactor pressure is reduced incrementally to values between 100 kPa and 120 kPa while at the same time reducing the reactor temperature to 20°C to 100°C, the reactor pressure at any time point corresponding to the internal pressure in the closed baking mould, and

d) removing the at least one closed baking mould containing the baked good from the reactor.

2. Method according to claim 1, **characterized in that** the baking process in step c) is performed with the following pressure and temperature profile:

- in the first phase (phase 1) the reactor pressure is built up to values between 150 kPa to 300 kPa, preferably 150 kPa to 200 kPa, at a reactor temperature between 100°C to 200°C, preferably 120°C to 170°C,

- in the second phase (phase 2) the reactor pressure and reactor temperature set in the first phase (phase 1) are maintained over a period in which the baking mixture is baked, and

- in the third phase (phase 3) the reactor pressure is reduced incrementally to values between 100 kPa and 120 kPa while at the same time reducing the reactor temperature to 30 to 60°C, the reactor pressure at any time point corresponding to the internal pressure in the baking mould.

3. Method according to claim 1 or 2, **characterized in that** the baking mixture has a water activity $a_w$ of 0.65 to 0.95, preferably 0.7 to 0.95.

4. Method according to one of the preceding claims, **characterized in that** the baked good has a water activity $a_w$ of 0.65 to 0.95, preferably 0.7 to 0.95.

5. Method according to one of the preceding claims, **characterized in that** the at least one inert gas to which the baking mixture is exposed is selected from the group comprising nitrogen and carbon dioxide or the mixture thereof.

6. Method according to one of the preceding claims, **characterized in that** the the density of the baking mixture after exposure to the inert gas and/or air is between 0.45 and 0.7 $g/cm^3$, preferably between 0.45 and 0.6 $g/cm^3$.

7. Method according to one of the preceding claims, **characterized in that** the pressure in the reactor is built up using steam and/or compressed air.

8. Method according to one of the preceding claims, **characterized in that** in the first phase (phase 1) the reactor pressure is set to values between 150 kPa and 300 kPa, particularly preferably between 150 kPa and 200 kPa, over a period of 5 to 20 minutes, in particular 7 to 15 minutes, at a reactor temperature between 80°C and 300°C, preferably between 100°C and 200°C, particularly preferably 120°C to 170°C.

9. Method according to one of the preceding claims, **characterized in that** in the second phase (phase 2) the reactor pressure is held at values between 150 and 300 kPa, particularly preferably between 150 and 200 kPa, at a reactor temperature between 100°C and 200°C, particularly preferably 120°C to 170°C, over a period of 8 to 100 minutes, particularly preferably 10 to 30 minutes.

10. Method according to one of the preceding claims, **characterized in that** the third phase (phase 3) is divided into at least two sub-phases (phases 3a and 3b), wherein in sub-phase 3a the pressure from the second phase (phase 2) is initially kept constant and only the temperature is reduced and in sub-phase 3b both the pressure and the temperature are reduced.

11. Method according to Claim 10, **characterized in that** in sub-phase 3a the reactor temperature is reduced by 20 to 100°C, preferably 50 to 80°C, in comparison to the reactor temperature in the second phase (phase 2) over a period of 1 minute to 10 minutes, preferably 2 to 5 minutes, while the pressure is kept constant and is adjusted to the internal pressure in the closed baking mould in the second phase (phase 2).

**12.** Method according to Claim 10 or 11, **characterized in that** in sub-phase 3b the reactor temperature is reduced to end values between 20°C to 60°C, preferably 30°C to 50°C, and the reactor pressure is reduced to end values between 100 kPa and 120 kPa over a period of 5 minutes to 30 minutes, preferably 10 minutes to 20 minutes, particularly preferably 10 to 15 minutes.

**Revendications**

**1.** Procédé pour la cuisson d'une composition à cuire, dans au moins un moule de cuisson fermé qui est constitué de feuille d'aluminium revêtue, comprenant les étapes consistant à

   a) préparer une composition à cuire, en particulier une composition de pâtisserie, et exposer la composition à cuire à au moins un gaz inerte et/ou à l'air, la densité de la composition de la composition à cuire après l'exposition au gaz inerte et/ou à l'air étant comprise entre 0,4 et 0,8 g/cm$^3$,
   b) introduire la composition à cuire dans ledit au moins un moule de cuisson et fermer ledit au moins un moule de cuisson,
   c) cuire dans au moins un réacteur la composition à cuire dans ledit au moins un moule de cuisson fermé, dans lequel

   - dans une première phase (phase 1) on effectue l'établissement d'une pression dans le réacteur jusqu'à des valeurs comprises entre 120 kPa et 400 kPa en un espace de temps de 3 à 30 min à une température du réacteur comprise entre 80 °C et 300 °C, la pression dans le réacteur correspondant à chaque instant à la pression interne dans le moule de cuisson fermé,
   - dans une deuxième phase (phase 2) on maintient la pression dans le réacteur à des valeurs comprises entre 120 kPa et 400 kPa à une température du réacteur comprise entre 80 °C et 300 °C pendant une durée de 5 min à 200 min, pendant laquelle la composition à cuire est cuite, et
   - dans une troisième phase (phase 3) on abaisse graduellement la pression dans le réacteur jusqu'à des valeurs comprises entre 100 kPa et 120 kPa en abaissant en même temps la température du réacteur jusqu'à une température de 20 °C à 100 °C, la pression dans le réacteur correspondant à chaque instant à la pression interne dans le moule de cuisson fermé, et

   d) enlever du réacteur ledit au moins un moule de cuisson fermé contenant la composition à cuire cuite.

**2.** Procédé selon la revendication 1, **caractérisé en ce que** dans l'étape c) on effectue la cuisson avec le profil de pression et de température suivant :

   - dans la première phase (phase 1) on élève la pression dans le réacteur jusqu'à des valeurs comprises entre 150 kPa à 300 kPa, de préférence 150 kPa à 200 kPa à une température du réacteur comprise entre 100 °C à 200 °C, de préférence 120 °C à 170 °C.
   - dans la deuxième phase (phase 2) on maintient la pression dans le réacteur et la température du réacteur établies dans la première phase (phase 1), pendant une durée pendant laquelle est cuite la composition à cuire, et
   - dans la troisième phase (phase 3) on abaisse graduellement la pression dans le réacteur jusqu'à des valeurs comprises entre 100 kPa et 120 kPa en abaissant en même temps la température du réacteur jusqu'à une température de 30 à 60 °C, la pression dans le réacteur correspondant à chaque instant à la pression interne dans le moule de cuisson.

**3.** Procédé selon la revendication 1 ou 2, **caractérisé en ce que** la composition à cuire présente une activité de l'eau $a_w$ de 0,65 à 0,95, de préférence de 0,7 à 0,95.

**4.** Procédé selon l'une quelconque des revendications précédentes, **caractérisé en ce que** la composition à cuire cuite présente une activité de l'eau $a_w$ de 0,65 à 0,95, de préférence de 0,7 à 0,95.

**5.** Procédé selon l'une quelconque des revendications précédentes, **caractérisé en ce qu'**au moins un gaz inerte pour l'exposition du mélange à cuire est choisi dans le groupe comprenant l'azote et le dioxyde de carbone ou un mélange de ceux-ci.

**6.** Procédé selon l'une quelconque des revendications précédentes, **caractérisé en ce qu'**après exposition au gaz inerte et/ou à l'air la la densité de la composition à cuire est comprise entre 0,45 et 0,7 g/cm$^3$, de préférence entre 0,45 et 0,6 g/cm$^3$.

**7.** Procédé selon l'une quelconque des revendications précédentes, **caractérisé en ce qu'**on élève la pression dans le réacteur en utilisant de la vapeur et/ou de l'air comprimé.

**8.** Procédé selon l'une quelconque des revendications précédentes, **caractérisé en ce que** dans la première phase (phase 1) on ajuste la pression dans le réacteur à des valeurs comprises entre 150 kPa et 300 kPa, de façon particulièrement préférée entre 150 kPa et 200 kPa en un espace de temps de 5 à 20 min, en particulier de 7 à 15 min, à une température du réacteur comprise entre 80 °C et 300 °C, de préférence ente 100 °C et 200 °C, de façon particulièrement préférée de 120 °C à 170 °C.

**9.** Procédé selon l'une quelconque des revendications précédentes, **caractérisé en ce que** dans la deuxième phase (phase 2) on maintient la pression dans le réacteur à des valeurs comprises entre 150 et 300 kPa, de façon particulièrement préférée entre 150 et 200 kPa, à une température du réacteur comprise entre 100 °C et 200 °C, de façon particulièrement préférée de 120 °C à 170 °C pendant une durée de 8 à 100 min, de façon particulièrement préférée de 10 à 30 min.

**10.** Procédé selon l'une quelconque des revendications précédentes, **caractérisé en ce que** la troisième phase (phase 3) est divisée en au moins deux phases partielles (phases 3a et 3b), où dans la phase partielle 3a on maintient d'abord constante la pression de la deuxième phase (phase 2) et on abaisse seulement la température et dans la phase partielle 3b on abaisse aussi bien la pression que la température.

**11.** Procédé selon la revendication 10, **caractérisé en ce que** dans la phase partielle 3a on abaisse la température du réacteur de 20 à 100 °C, de préférence de 50 à 80 °C en comparaison de la température du réacteur dans la deuxième phase (phase 2) en un espace de temps de 1 min à 10 min, de préférence de 2 à 5 min, tout en maintenant la pression constante et adaptée à la pression interne dans le moule de cuisson fermé dans la deuxième phase (phase 2).

**12.** Procédé selon la revendication 10 ou 11, **caractérisé en ce que** dans la phase partielle 3b on abaisse la température du réacteur jusqu'à des valeurs finales comprises entre 20 °C à 60 °C, de préférence 30 °C à 50 °C et la pression dans le réacteur jusqu'à des valeurs finales comprises entre 100 kPa et 120 kPa en un espace de temps de 5 à 30 min, de préférence de 10 min à 20 min ; de façon particulièrement préférée de 10 à 15 min.

Herstellung einer Rührkuchenmasse (Homogenisieren der Rohstoffe)

Aufschlagen der Rührkuchenmasse mit Stickstoff Dichte: 0,45-0,5 $gcm^{-3}$

Verschließend der Backformen mit beschichteter Aluminiumfolie

Dosieren der Masse in Backformen aus beschichteter Aluminiumfolie

Einsetzen der Backformen in den Reaktor

Druck- und Temperaturverlauf im Reaktor

1. Phase: t = 480sec; T= 120 °C; p= 50 bis 200kPa Überdruck ansteigend
2. Phase: t = 630sec; T=120 °C; p= 200kPa Überdruck
3. Phase: t= 150sec; T= 120 °C ⇒ 100 °C; p= 200kPa Überdruck
4. Phase: t=850sec; T= 100 °C ⇒ 60 °C; p= 200kPa ⇒ 50kPa

Entleeren des Reaktors

Figur 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- ES 2342917 A1
- US 3531300 A

- US 3769028 A